# FASCICULE DE BREVET EUROPEEN

(11) **EP 1 606 148 B1**
(45) Date de publication et mention de la délivrance du brevet: **06.06.2012**
(21) Numéro de dépôt: 03799691.5
(22) Date de dépôt: 22.12.2003
(51) Int. Cl.: B62D 25/16, B60R 21/34

(54) **AILE DE CARROSSERIE**
KOTFLÜGEL
BODY WING

(30) Priorité: 30.12.2002 FR 0216831
(43) Date de publication de la demande: 21.12.2005
(73) Titulaire: Renault s.a.s., 92100 Boulogne Billancourt (FR)
(72) Inventeur: GINESTET, Thierry, F-78180 Montigny Le Bretonneux (FR); ZANOLIN, Dominique, F-78150 Le Chesnay (FR)
(86) Numéro de dépôt international: PCT/FR2003/003873
(87) Numéro de publication internationale: WO 2004/060726

(56) Documents cités:
- EP-A- 1 090 818
- EP-A- 1 346 887
- DE-A- 10 031 372
- DE-A- 10 102 187
- PATENT ABSTRACTS OF JAPAN vol. 2000, no. 07, 29 septembre 2000 (2000-09-29) & JP 2000 108841 A (MAZDA MOTOR CORP), 18 avril 2000 (2000-04-18)

## Description

La présente invention concerne une aile de carrosserie pour véhicule automobile.

La carrosserie d'un véhicule automobile est communément constituée d'une pluralité d'éléments distincts qui sont solidarisés sur une structure rigide, formant châssis. Parmi ces éléments, on distingue notamment les deux ailes avants qui sont plus particulièrement destinées à recouvrir et à entourer les roues avants du véhicule.

De part leur fonction, les ailes avants d'un véhicule automobile sont habituellement positionnées latéralement de part et d'autre du capot moteur. A des fins esthétiques, chaque bord latéral du capot est généralement aligné de manière sensiblement continue par rapport à la partie supérieure de l'aile correspondante. Bien entendu, les bords latéraux du capot ne sont pas solidaires des ailes avants afin de permettre le pivotement transversal dudit capot, et ainsi l'accès au compartiment moteur. Il existe par conséquent un espace non négligeable entre chaque bord latéral du capot et la partie supérieure de l'aile correspondante.

Dans la pratique, pour des raisons essentiellement esthétiques et notamment de qualité perçue il s'avère particulièrement avantageux que les intervalles existant entre le capot moteur et les ailes ne permettent pas un accès visuel à l'intérieur du compartiment moteur depuis l'extérieur. Aussi, il est connu dans ce domaine de conformer la partie supérieure des ailes de manière à ce que leurs bords internes respectifs soient en mesure de s'étendre en regard des intervalles en question, lorsque le capot est en position fermée. L'espace existant entre chaque bord latéral du capot et la partie supérieure de l'aile correspondante, est ainsi avantageusement obturée par l'intérieur.

Ce type d'aile de carrosserie présente toutefois l'inconvénient d'être incompatible avec une nouvelle norme concernant la protection des piétons en cas de choc avant avec un véhicule automobile. Cette norme impose notamment la nécessité de doter le capot moteur d'un débattement vertical susceptible d'amortir l'impact, afin de limiter les risques de lésions corporelles de la victime.

En effet, en cas de collision, un tel capot va amorcer une descente verticale pour tenter d'absorber le choc. Le capot va en fait progressivement s'enfoncer entre les parties supérieures des ailes jusqu'à ce que ses bords latéraux viennent au contact des bords internes. Mais comme ces bords internes font parties intégrantes des ailes, ils présentent une rigidité structurelle telle qu'ils ne vont pas s'effacer sous la pression exercée par les bords latéraux du capot. Le capot va ainsi rester en appui sur les bords internes, ce qui va avoir pour conséquence néfaste de faire intervenir la rigidité intrinsèque des ailes et de leurs éléments de supports. Le déplacement vertical du capot va alors être rapidement interrompu, de sorte que la capacité d'amortissement et donc l'efficacité d'un tel système doit être considérée comme extrêmement limitée.

Pour remédier à cette difficulté, on a imaginé fixer la partie supérieure de chaque aile sur un élément support déformable. Cependant, il s'est avéré que la résistance d'un tel dispositif demeurait toujours trop importante malgré la raideur moindre de l'élément de déformation. Le principe utilisé implique en effet une déformation non négligeable des ailes.

C'est le cas notamment du document DE 100 31 372, qui décrit un agencement d'une aile de carrosserie selon le préambule de la revendication 1. Bien que le système d'escamotage de l'aile décrit dans ce document permette de résoudre en partie les inconvénients ci-dessus, il subsiste toujours des problèmes en termes de contraintes d'assemblage, d'efficacité, de mise en oeuvre de la liaison, etc.

Aussi, le problème technique à résoudre par l'objet de la présente invention est de résoudre l'ensemble des inconvénients ci-dessus et de proposer un agencement d'une aile de carrosserie selon le préambule de la revendication 1 annexée, agencement qui permettrait d'éviter les problèmes de l'état de la technique en garantissant notamment au capot une amplitude de déplacement vertical satisfaisante.

La solution au problème technique posé consiste, selon la présente invention, en ce que ledit bord interne comporte au moins une zone, dite de déformation, dont la rigidité intrinsèque est inférieure à celle dudit corps de l'aile, et en ce que la rigidité intrinsèque et ledit pivotement dudit bord interne sont prédéterminés de sorte à ce que ledit bord interne s'efface suffisamment et autorise le passage du bord latéral correspondant du capot, lorsque celui-ci exerce une force de pression vers le bas.

L'invention telle qu'ainsi définie présente l'avantage de permettre au bord interne de se déformer prioritairement par rapport au reste de l'aile, lors d'une descente verticale du capot. Le bord interne est ainsi en mesure de s'effacer avantageusement lorsque le bord latéral correspondant du capot exerce une force de pression suffisante. La descente du capot peut alors se poursuivre au delà du bord interne, de sorte que l'amplitude du débattement verticale et par conséquent la capacité d'amortissement du capot peuvent être considérées comme optimales.

De manière particulièrement avantageuse, le déplacement vertical du capot s'effectue indépendamment de la rigidité du corps de l'aile. Le bord interne constitue à ce titre une véritable zone de déformation programmée, à l'image de ce que l'on rencontre avec certains éléments de châssis dédiés à la sécurité passive du véhicule automobile.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée, en référence aux dessins annexés sur lesquels:
La figure 1 illustre schématiquement, et en perspective interne, une aile de carrosserie conforme à l'invention.
La figure 2 représente en détail la partie cerclée de la figure 1.
La figure 3 montre de manière partielle et schématique la partie latérale avant d'un véhicule automobile au moment d'un impact, ledit véhicule étant doté d'un aile identique à celle de la figure 1.
La figure 4 est une vue similaire à la figure 3, mais dans laquelle le capot à été représenté conformément à une première phase de sa descente verticale.
La figure 5 constitue une vue similaire à la figure 3, mais dans laquelle le capot à été illustré conformément à une seconde phase de sa descente verticale.
La figure 6 est une vue similaire à la figure 3, mais dans laquelle le capot à été représenté conformément à une troisième phase de sa descente verticale.

Pour des raisons de clarté, les mêmes éléments ont été désignés par des références identiques. De même, seuls les éléments essentiels pour la compréhension de l'invention ont été représentés, et ceci sans respect de l'échelle et de manière schématique.

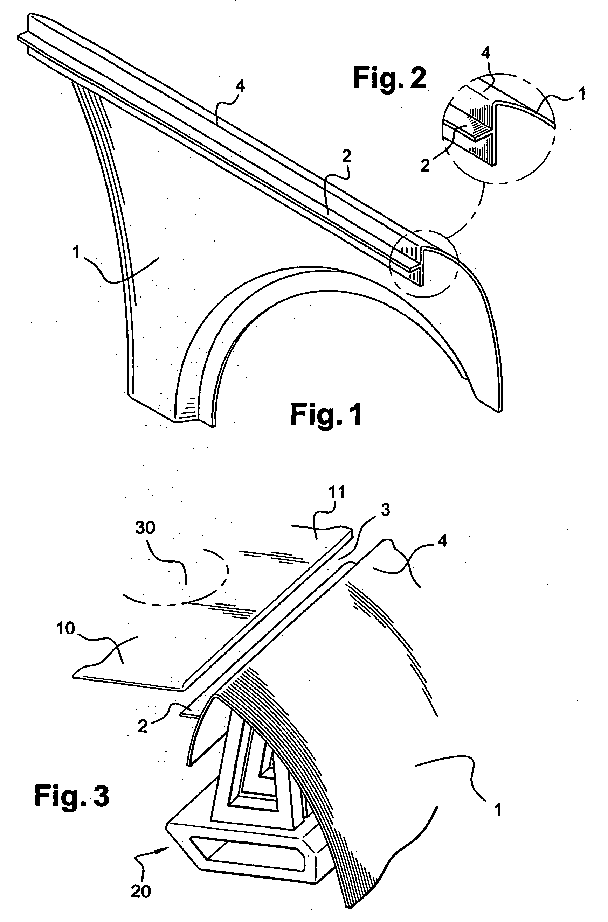

Les figures 1 à 6 illustrent une aile de carrosserie 1 qui est destinée à prendre place à proximité d'un capot 10 d'un véhicule automobile 20. L'aile 1 comporte un bord interne 2 qui est apte à s'étendre en regard de l'intervalle 3 existant entre le bord latéral 11 correspondant du capot 10 et la partie supérieure 4 de l'aile 1, lorsque ledit capot 10 est en position fermée (figure 3).

Conformément à l'objet de la présente invention, le bord interne 2 comporte au moins une zone, dite de déformation, dont la rigidité intrinsèque est inférieure à celle du reste de l'aile 1.

De manière particulièrement avantageuse, au moins une zone de déformation est positionnée au niveau de la zone de jonction reliant le bord interne 2 et le corps de l'aile 1. Le bord interne 2 est ainsi en mesure de pivoter vers le bas, autour d'un axe passant sensiblement par la partie qui le relie au corps de l'aile 1. Le bord interne 2 est par conséquent apte à s'effacer quasiment en totalité.

Selon une particularité de l'invention, chaque zone de déformation s'étend sur sensiblement toute la longueur du bord interne 2. Cette caractéristique permet au bord interne 2 de se déformer transversalement de manière homogène et continue sur toute sa longueur.

Selon une autre particularité de l'invention, chaque zone de déformation s'étend sur sensiblement toute la largeur du bord interne 2. Cette caractéristique confère au bord interne 2 la capacité de se déformer sur toute la largeur de la zone de déformation considérée.

En combinant les deux particularités précédemment décrites, il est ainsi possible de disposer avantageusement d'un bord interne 2 dont toute la surface présente une rigidité intrinsèque inférieure à celle du reste de l'aile 1.

Bien entendu, toutes les techniques connues qui sont en mesure de conférer au bord interne 2 une rigidité intrinsèque inférieure à celle du reste de l'aile 1, peuvent être utilisées dans le cadre de l'invention.

Ainsi, selon un premier mode de réalisation de l'invention, une zone de déformation peut présenter une épaisseur inférieure à celle du reste de l'aile 1.

Mais selon un second mode de réalisation de l'invention, une zone de déformation peut également être constituée par un matériau dont la rigidité intrinsèque est inférieure à celle du matériau constituant le reste de l'aile 1.

Enfin, selon un troisième mode de réalisation de l'invention, une zone de déformation peut par ailleurs comporter au moins une amorce de rupture.

La figure 3 montre plus particulièrement le positionnement du capot 10 par rapport à l'aile 1, avant que ne survienne un impact symbolisé ici par la présence d'un élément contondant 30 à proximité dudit capot 10. On observe que le bord latéral 11 est aligné de manière sensiblement continue par rapport à la partie supérieure 4 de l'aile 1. Le bord interne 2 s'étend quant à lui sous l'intervalle 3 existant entre le bord latéral 11 du capot 10 et la partie supérieure 4 de l'aile 1. Le bord interne 2 est ainsi en mesure d'interdire tout accès visuel à l'intérieur du compartiment moteur depuis l'extérieur.

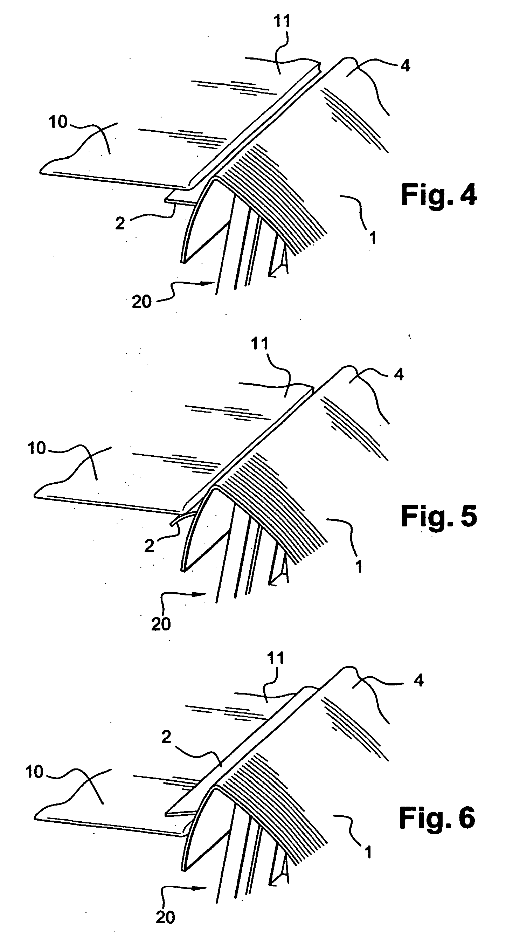

Ainsi qu'on peut le voir sur la figure 4, au moment de la collision effective, le capot 10 va amorcer une descente verticale qui est destinée à absorber le choc. Le capot 10 va ainsi commencer à s'enfoncer progressivement entre les parties supérieures 4 des ailes 1.

Conformément à la figure 5, lorsque chaque bord latéral 11 arrive au contact du bord interne 2 correspondant, ledit bord interne 2 va pivoter vers le bas jusqu'à s'effacer suffisamment pour permettre le passage du capot 10. De manière avantageuse, le bord interne 2 se déforme prioritairement par rapport au reste de l'aile 1, puisque sa rigidité intrinsèque est la plus faible de la pièce.

La descente du capot 10 peut alors se poursuivre comme le montre la figure 6. L'amplitude du débattement verticale du capot 10, et par conséquent sa capacité d'absorption, sont ainsi optimales.

Bien entendu, l'invention concerne également tout véhicule automobile 20 doté d'au moins une aile de carrosserie 1 telle que précédemment décrite. Il est à noter que la notion de véhicule automobile 20 concerne ici tout véhicule à moteur, c'est-à-dire tout engin roulant capable de progresser de lui-même à l'aide d'un moteur, quel que soit le type dudit moteur et indépendamment de la taille et/ou du poids dudit véhicule. Par conséquent, un véhicule automobile pourra désigner aussi bien une voiture, un camion ou un autobus par exemple.

## Revendications

1. Agencement d'une aile de carrosserie (1) destinée à être solidarisée à proximité d'un capot (10) d'un véhicule automobile (20), l'aile (1) comportant un bord interne (2) s'étendant en regard de l'intervalle (3) existant entre un bord latéral (11) correspondant du capot (10) et une partie supérieure (4) de l'aile (1) et sensiblement perpendiculairement à celle-ci lorsque ledit capot (10) est en position fermée, de sorte à ce que ledit bord interne (2) effectue un pivotement vers le bas, autour d'un axe passant par la partie qui le relie à ladite partie supérieure (4) de l'aile (1), lorsque le bord latéral (11) correspondant du capot (10) exerce une force de pression vers le bas, **caractérisé en ce que** ledit bord interne (2) comporte au moins une zone, dite de déformation, dont la rigidité intrinsèque est inférieure à celle dudit corps de l'aile (1), et **en ce que** la rigidité intrinsèque et ledit pivotement dudit bord interne (2) sont prédéterminés de sorte à ce que ledit bord interne (2) s'efface suffisamment et autorise le passage du bord latéral (11) correspondant du capot (10), lorsque celui-ci exerce une force de pression vers le bas.

2. Agencement selon la revendication 1, **caractérisé en ce qu'**au moins une zone de déformation est positionnée au niveau de la zone de jonction reliant le bord interne (2) et la partie supérieure (4) de l'aile (1).

3. Agencement selon l'une des revendications 1 ou 2, **caractérisé en ce que** chaque zone de déformation s'étend sur sensiblement toute la longueur du bord interne (2).

4. Agencement selon l'une quelconque des revendications 1 à 3, **caractérisé en ce que** chaque zone de déformation s'étend sur sensiblement toute la largeur du bord interne (2).

5. Agencement selon l'une quelconque des revendications 1 à 4, **caractérisé en ce que** tout le bord interne (2) présente une rigidité intrinsèque inférieure à celle du reste de l'aile (1).

6. Agencement selon l'une quelconque des revendications 1 à 5, **caractérisé en ce qu'**au moins une des dites zones de déformation présente une épaisseur inférieure à celle du reste de l'aile (1).

7. Agencement selon l'une quelconque des revendications 1 à 6, **caractérisé en ce qu'**au moins une des dites zones de déformation est constituée par un matériau dont la rigidité intrinsèque est inférieure à celle du matériau constituant le reste de l'aile (1).

8. Agencement selon l'une quelconque des revendications 1 à 7, **caractérisé en ce qu'**au moins une des dites zones de déformation comporte au moins une amorce de rupture.

9. Véhicule automobile (20), **caractérisé en ce qu'**il comporte au moins un agencement selon l'une quelconque des revendications précédentes.

## Claims

1. Arrangement of a body wing (1) designed to be secured close to a bonnet (10) of a motor vehicle (20), the wing (1) comprising an inner edge (2) extending facing the gap (3) that exists between a corresponding lateral edge (11) of the bonnet (10) and an upper portion (4) of the wing (1) and substantially perpendicularly to the latter when the said bonnet (10) is in the closed position, so that the said inner edge (2) pivots downward, about an axis passing through the portion that connects it to the said upper portion (4) of the wing (1), when the corresponding lateral edge (11) of the bonnet (10) exerts a downward pressure, **characterized in that** the said inner edge (2) comprises at least one zone, called the deformation zone, the intrinsic rigidity of which is less than that of the said body of the wing (1), and **in that** the intrinsic rigidity and the said pivoting of the said inner edge (2) are predetermined such that the said inner edge (2) retracts sufficiently and allows the passage of the corresponding lateral edge (11) of the bonnet (10) when the latter exerts a downward pressure.

2. Arrangement according to Claim 1, **characterized in that** at least one deformation zone is positioned in the junction zone connecting the inner edge (2) and the upper portion (4) of the wing (1).

3. Arrangement according to one of Claims 1 and 2, **characterized in that** each deformation zone extends over substantially the whole length of the inner edge (2).

4. Arrangement according to any one of Claims 1 to 3, **characterized in that** each deformation zone extends over substantially the whole width of the inner edge (2).

5. Arrangement according to any one of Claims 1 to 4, **characterized in that** the whole inner edge (2) has an intrinsic rigidity that is less than that of the rest of the wing (1).

6. Arrangement according to any one of Claims 1 to 5, **characterized in that** at least one of the said deformation zones has a thickness that is less than that of the rest of the wing (1).

7. Arrangement according to any one of Claims 1 to 6, **characterized in that** at least one of the said deformation zones consists of a material the intrinsic rigidity of which is less than that of the material forming the rest of the wing (1).

8. Arrangement according to any one of Claims 1 to 7, **characterized in that** at least one of the said deformation zones comprises at least one fracture initiation line.

9. Motor vehicle (20), **characterized in that** it comprises at least one arrangement according to any one of the preceding claims.

## Patentansprüche

1. Gestaltung eines Kotflügels (1), der dazu bestimmt ist, in der Nähe einer Motorhaube (10) eines Kraftfahrzeugs (20) befestigt zu werden, wobei der Flügel (1) einen Innenrand (2) aufweist, der sich gegenüber dem zwischen einem entsprechenden Seitenrand (11) der Haube (10) und einem oberen Teil (4) des Flügels (1) existierenden Zwischenraum (3) und im Wesentlichen lotrecht dazu erstreckt, wenn die Haube (10) in der geschlossenen Stellung ist, so dass der Innenrand (2) ein Schwenken nach unten um eine Achse, die durch den Teil verläuft, der ihn mit dem oberen Teil (4) des Flügels (1) verbindet, durchführt, wenn der entsprechende Seitenrand (11) der Haube (10) eine Druckkraft nach unten ausübt, **dadurch gekennzeichnet, dass** der Innenrand (2) mindestens eine so genannten Verformungszone aufweist, deren Eigensteifigkeit geringer als die des Körpers des Flügels (1) ist, und dass die Eigensteifigkeit und das Schwenken des Innenrands (2) so vorbestimmt sind, dass der Innenrand (2) ausreichend weit zurückweicht und den Durchgang des entsprechenden Seitenrands (11) der Haube (10) erlaubt, wenn diese eine Druckkraft nach unten ausübt.

2. Gestaltung nach Anspruch 1, **dadurch gekennzeichnet, dass** mindestens eine Verformungszone im Bereich der Verbindungszone positioniert ist, die den Innenrand (2) und den oberen Teil (4) des Flügels (1) verbindet.

3. Gestaltung nach einem der Ansprüche 1 oder 2, **dadurch gekennzeichnet, dass** jede Verformungszone sich über im Wesentlichen die ganze Länge des Innenrands (2) erstreckt.

4. Gestaltung nach einem der Ansprüche 1 bis 3, **dadurch gekennzeichnet, dass** jede Verformungszone sich über im Wesentlichen die ganze Breite des Innenrands (2) erstreckt.

5. Gestaltung nach einem der Ansprüche 1 bis 4, **dadurch gekennzeichnet, dass** der ganze Innenrand (2) eine Eigensteifigkeit geringer als diejenige des Rests des Flügels (1) aufweist.

6. Gestaltung nach einem der Ansprüche 1 bis 5, **dadurch gekennzeichnet, dass** mindestens eine der Verformungszonen eine geringere Dicke als der Rest des Flügels (1) aufweist.

7. Gestaltung nach einem der Ansprüche 1 bis 6, **dadurch gekennzeichnet, dass** mindestens eine der Verformungszonen aus einem Material besteht, dessen Eigensteifigkeit geringer als die des Materials ist, das den Rest des Flügels (1) bildet.

8. Gestaltung nach einem der Ansprüche 1 bis 7, **dadurch gekennzeichnet, dass** mindestens eine der Verformungszonen mindestens eine Sollbruchstelle aufweist.

9. Kraftfahrzeug (20), **dadurch gekennzeichnet, dass** es mindestens eine Gestaltung nach einem der vorhergehenden Ansprüche aufweist.
